# DEMANDE DE BREVET EUROPEEN

(11) **EP 3 609 056 A1**
(43) Date de publication de la demande: **12.02.2020**
(21) Numéro de dépôt: 19190787.2
(22) Date de dépôt: 08.08.2019
(51) Int. Cl.: H02K 7/116, G01P 3/487

(54) **MOTORÉDUCTEUR PLANÉTAIRE À DEUX ARBRES DE SORTIES COAXIAUX ENTRE EUX**

(30) Priorité: 08.08.2018 FR 1857387
(71) Demandeur: Unicum Transmission de Puissance, 42150 La Ricamarie (FR)
(72) Inventeur: SMANIA, Marco, 69007 LYON (FR)
(74) Mandataire: Cabinet Laurent & Charras

(57) **Abrégé**

L'invention concerne un motoréducteur (1) remarquable en ce qu'il comprend :
- un moteur électrique (2) traversé, de part en part, par un arbre rotor (3), de manière à former deux axes de sortie moteur, chaque axe de sortie présente un pignon (4) ;
- au moins deux réducteurs planétaires (5) à au moins un étage, chacun engrené avec le pignon (4) d'un axe de sortie moteur ;
- deux arbres (11) de sortie motoréducteur (1), chacun étant accouplé directement ou indirectement à un réducteur planétaire (5), les deux arbres (11) de sortie motoréducteur (1) étant coaxiaux entre eux.

## Description

### DOMAINE TECHNIQUE

La présente invention se rapporte au domaine technique des motoréducteurs, notamment destinés à l'entraînement en translation d'un élément guidé par deux moyens de guidage ou d'entrainement parallèles, positionnés de part et d'autre dudit élément.

L'invention trouve une application avantageuse par exemple pour l'entraînement en translation d'une poutre, d'un portique, d'une bâche de recouvrement d'une benne d'un camion benne, ou bien d'un abri ou d'une terrasse de piscine.

Bien entendu, d'autres applications peuvent être envisagées.

### ART ANTERIEUR

Il est connu de l'état de la technique d'utiliser un motoréducteur pour réaliser le déplacement en translation d'un élément guidé par deux moyens de guidage ou d'entrainement parallèles, tels que des rails, situés de part et d'autre de l'élément.

Le motoréducteur présente, d'une manière générale, un moteur électrique comprenant un arbre rotor accouplé par exemple à au moins un réducteur, et un arbre de sortie.

Le motoréducteur est généralement installé sur un côté de l'élément à déplacer, au niveau de l'un des moyens guidage ou d'entrainement et, lorsque la masse de l'élément à déplacer devient trop importante, ou bien que la distance entre les deux moyens de guidage ou d'entrainement devient trop importante, il y a un risque d'endommagement ou de coincement du système d'entraînement.

En effet, étant donné que les moyens de guidage ou d'entrainement présentent, d'une manière générale, un jeu mécanique, une poussée trop importante au niveau d'un seul côté de l'élément à déplacer risque de créer un déséquilibre et de mettre « en diagonale » l'élément jusqu'au point d'endommager ou de bloquer le guidage ou l'entrainement.

Pour résoudre ce problème, il est connu d'utiliser deux motoréducteurs identiques, positionnés de chaque côté de l'élément à déplacer.

Cette solution permet de supprimer le déséquilibre, mais présente des inconvénients, notamment économiques. Par ailleurs, d'un point de vue technique, cette solution oblige à contrôler avec précision la rotation des deux motoréducteurs, en position, en vitesse et en couple, notamment d'une manière parfaitement synchronisée.

En effet, il est nécessaire de répartir exactement le couple à 50 % entre les deux motoréducteurs pour obtenir un contrôle de position du déplacement précis. Ceci impose notamment l'utilisation de capteurs et d'électronique de commande sophistiqués, ce qui grève le coût total du système.

Il est également connu d'utiliser un motoréducteur positionné entre les moyens de guidage, du type roue et vis avec un arbre creux, en coopération avec un arbre traversant pour rejoindre les moyens d'entrainement.

Cette solution est beaucoup plus simple en termes de contrôle car, étant donné que le motoréducteur présente un seul arbre de sortie, la répartition du couple est parfaite. Cette solution présente également un avantage en termes de coût de réalisation qui est beaucoup plus économique que celui de la réalisation précédente.

Cependant, cette solution présente quelques inconvénients, notamment en termes énergétiques, géométriques et d'encombrement.

En effet, les trains d'engrenage utilisés pour les motoréducteurs de l'état de la technique sont, de manière générale, le train plat ou simple, c'est-à-dire présentant des engrenages cylindriques avec des lignes d'arbre parallèles, le train épicycloïdal ou planétaire, et le système roue et vis.

Parmi ces trois options, à couple équivalent et à qualité de finition d'engrenage égale, le train planétaire est celui qui présente généralement un meilleur rendement énergétique, tandis que celui qui présente le rendement énergétique le plus faible est le système roue et vis.

Par conséquent, à performance égale, le moteur électrique pour le système roue et vis sera dimensionné d'une manière beaucoup plus importante et consommera beaucoup plus d'énergie que le moteur électrique associé au réducteur à train planétaire.

Il s'ensuit que ces problèmes d'encombrement posent des limites de mise en oeuvre et d'installation, notamment lorsque le moteur est destiné à être alimenté par une batterie, par exemple alimentée elle-même par un panneau solaire.

En ce qui concerne l'encombrement de la solution des motoréducteurs avec système roue et vis, le corps du motoréducteur s'étend souvent dans une direction orthogonale à l'axe de rotation, de sorte qu'il est souvent onéreux et/ou compliqué de positionner et de loger le motoréducteur dans l'environnement dans lequel il doit être installé.

Un autre inconvénient de cette solution réside dans la hauteur de l'axe de sortie, c'est-à-dire notamment de la distance entre l'axe de sortie et le plan ou la surface de réception des moyens de guidage ou d'entrainement.

En effet, dans une installation typique dans laquelle le motoréducteur est positionné vers le haut et perpendiculairement au plan recevant les moyens de guidage, pour obtenir des rapports de réduction élevés, la hauteur de l'axe de sortie est souvent plus élevée par rapport aux pignons/roues/poulies qui permettent de déplacer l'élément. Cette situation impose aux constructeurs d'utiliser des cardans ou d'autres systèmes d'écartement et de liaison pour récupérer la coaxiale avec les pignons/roues/poulies d'entrainement.

Par ailleurs, en fonction de l'application considérée, il est parfois nécessaire de devoir compter le nombre de tours du motoréducteur.

Par exemple, l'invention peut être utilisée pour réaliser une ensemble de motorisation pour l'entrainement de la couverture d'un bassin de piscine.

A cet effet, le motoréducteur comprend des capteurs de positions afin de déterminer le nombre de tours réalisés par le groupe motoréducteur et de gérer les fins de course de la couverture.

Il est connu du brevet FR3057891 une solution innovante au problème principal des capteurs de position électroniques dans les motoréducteurs pour couvertures de piscine.

En effet, la plupart des technologies utilisées consistent en des capteurs électroniques (inductifs, effet hall, etc.) qui sont sensibles aux surtensions assez fréquentes dans les applications en question (foudre, instabilité du secteur, etc.).

Le brevet FR3057891 a remédié à ces problèmes par l'agencement d'un composant complètement passif, à savoir un capteur mécanique.

La fiabilité des motoréducteurs a donc été très nettement améliorée. Cependant, les inconvénients de cette technologie résident dans ses dimensions, la précision du signal et le coût, qui peuvent encore être améliorés.

### EXPOSE DE L'INVENTION

L'un des buts de l'invention est donc de remédier aux inconvénients de l'art antérieur en proposant un motoréducteur qui puisse être utilisé dans des applications destinées à déplacer en translation un élément par rapport à deux éléments de guidage ou d'entrainement parallèles positionnés de part et d'autre de l'élément à déplacer, en diminuant fortement les risques de blocage ou de détérioration, tout en étant économique à mettre en oeuvre, et tout en permettant de diminuer au maximum la distance entre les arbres de sortie du motoréducteur et la surface ou plan de réception des moyens de guidage ou d'entrainement.

Un autre objectif de la présente invention est de fournir un tel motoréducteur qui soit peu encombrant, tout en présentant une puissance appropriée à l'application concernée.

À cet effet, et selon invention, il a été mis au point un motoréducteur remarquable en ce qu'il comprend :
- un moteur électrique traversé, de part en part, par un arbre rotor, de manière à former deux axes de sortie moteur, chaque axe de sortie présentant un pignon ;
- au moins deux réducteurs planétaires à au moins un étage, chacun engrené avec le pignon d'un axe de sortie moteur ;
- deux arbres de sortie motoréducteurs, chacun étant accouplé directement ou indirectement à un réducteur planétaire, les deux arbres de sortie étant coaxiaux entre eux.

De cette manière, le motoréducteur selon invention peut être utilisé dans une application consistant à déplacer un élément en translation par rapport à deux moyens de guidage ou d'entrainement parallèles, en étant positionné entre les deux moyens de guidage ou d'entrainement. De ce qui précède, et étant donné que le motoréducteur présente deux arbres de sortie mécaniquement synchronisés, le contrôle du motoréducteur est simplifié et les problèmes de blocage ou de coinçage du système de guidage ou d'entraînement sont fortement diminués. Par ailleurs, le motoréducteur intègre des réducteurs planétaires et présente donc une puissance importante par rapport au faible encombrement du moteur électrique.

Selon des formes de réalisation différentes, et en fonction de l'application concernée et des besoins en puissance, le motoréducteur comprend plusieurs, et au moins deux réducteurs planétaires accouplés l'un à l'autre, positionnés de chaque côté du moteur électrique. Les réducteurs planétaires sont à au moins un étage, et de préférence à au moins deux étages ou plus.

Selon une forme de réalisation particulière, les arbres de sortie motoréducteurs sont chacun accouplé directement à un réducteur planétaire, de sorte que les arbres de sortie sont coaxiaux avec l'arbre rotor du moteur électrique.

Selon une autre forme de réalisation, et lorsqu'il est nécessaire de rapprocher au maximum l'axe des arbres de sortie motoréducteur du corps du motoréducteur, et notamment de la surface ou du plan de réception des moyens de guidage ou d'entrainement, les arbres de sortie motoréducteur sont accouplés indirectement au réducteur planétaire, et notamment par l'intermédiaire d'un train d'engrenage simple, de sorte que les arbres de sortie motoréducteur sont excentrés par rapport à l'arbre rotor du moteur électrique.

Cette solution permet donc d'excentrer l'axe des arbres de sortie par rapport à l'axe de l'arbre rotor du moteur électrique, et permet donc de pouvoir diminuer la distance entre l'axe des arbres de sortie motoréducteur et la surface ou le plan de réception des moyens de guidage ou d'entrainement, ou plus généralement entre l'axe des arbres de sortie motoréducteur et le corps du motoréducteur. Cela étant, il est donc possible, en fonction de la position du train d'engrenage simple, de faire varier la position des arbres de sortie autour d'un cercle dont le centre est matérialisé par l'axe de l'arbre rotor du moteur électrique. En d'autres termes, il est donc possible d'augmenter ou de diminuer la distance entre l'axe des arbres de sortie motoréducteur et la surface ou le plan de réception des moyens de guidage ou d'entrainement, en fonction de la position du train d'engrenage simple autour de l'axe de l'arbre rotor.

En pratique, cela permet de diminuer davantage l'encombrement du motoréducteur, et permet d'utiliser différents diamètres de pignons/roues/poulies d'entraînement des moyens de guidage ou d'entrainement, pour se rapprocher au plus près de la surface ou du plan de réception desdits moyens de guidage ou d'entrainement. L'avantage qui en résulte est la possibilité de s'affranchir de l'utilisation de cardans ou de systèmes complexes pour s'accoupler aux moyens de guidage ou d'entrainement.

Selon une forme de réalisation particulière, chaque réducteur planétaire comprend une couronne, et les couronnes sont ménagées à l'intérieur d'une enceinte tubulaire. Dans cette configuration, les enceintes tubulaires à l'intérieur desquelles sont ménagées les couronnes peuvent se prolonger autour du moteur électrique pour former directement le corps du motoréducteur, et les enceintes tubulaires peuvent être refermées par deux flaques à partir desquels font saillie les arbres de sortie motoréducteur.

Pour diminuer davantage l'encombrement, faciliter la fixation, et permettre de rapprocher l'axe des arbres de sortie motoréducteurs au plus près de la surface ou du plan de réception des moyens de guidage ou d'entrainement, les flasques de fixation sont carrés, avec des côtés d'une longueur sensiblement égale au diamètre des enceintes tubulaires. Ainsi, la fixation du motoréducteur s'effectue, par exemple au moyen de vis, positionnées uniquement dans les angles des flasques carrés.

Selon une autre forme de réalisation, et en fonction de l'application concernée, le motoréducteur comprend une enveloppe externe formée par un corps tubulaire creux renfermant les différents éléments du motoréducteur, et fermée de manière étanche à ses deux extrémités par des flasques au travers desquels font saillie de manière étanche les arbres de sortie motoréducteur.

Bien entendu, les flasques de fixation de cette forme de réalisation sont, de préférence, carrés avec des côtés d'une longueur sensiblement égale au diamètre de l'enveloppe externe.

Un autre objectif est de fournir un motoréducteur présentant des moyens pour compter son nombre de tours, d'une manière simple, peu encombrante et peu coûteuse, et qui puisse être parfaitement utilisé en milieu humide, par exemple à proximité ou immergé dans une piscine, sans être sensible aux surtensions (foudre, instabilité du secteur, etc.).

A cet effet, le motoréducteur selon l'invention comprend au moins un aimant positionné sur un élément rotatif du motoréducteur, et un interrupteur à lames souples positionné sur une partie fixe du motoréducteur, en regard de l'aimant lorsque l'élément rotatif est entrainé en rotation, l'interrupteur est destiné à être actionné lors du passage de l'aimant devant l'interrupteur pour permettre de compter le nombre de tours de l'élément rotatif.

L'interrupteur à lames souples est aussi connu sous l'acronyme « lLS » pour Interrupteur à Lames Souples, ou capteur « REED », et est un interrupteur magnétique dont les deux contacts sont magnétisés et placés dans une ampoule ou une enveloppe plastique contenant du diazote en général.

L'interrupteur se ferme de la même façon qu'un capteur mécanique, à savoir par ouverture et fermeture d'un circuit électrique. La différence principale c'est que le mouvement du microcontact est généré par une variation d'un champ magnétique et non pas par un ressort. De cette manière, sa fiabilité et sa durée de vie son optimale. Il n'est par ailleurs pas soumis aux surtensions, à la foudre, etc. et convient donc parfaitement pour être à proximité ou immergé dans une piscine par exemple.

De préférence, une pluralité d'aimants sont positionnés sur l'élément rotatif, régulièrement répartis autour de l'axe de rotation de l'élément rotatif.

Le passage des aimants devant l'interrupteur à lames souples permet d'actionner l'interrupteur. Etant donné que le mouvement est rotatif, le nombre d'aimants utilisés donnera la précision du codeur : ex. 12 aimants donnent un codeur qui détecte un déplacement angulaire de 30°. Ceci permet également de compter le nombre de tours de l'élément rotatif du motoréducteur.

En pratique, l'élément rotatif est par exemple au moins l'un des arbres de sortie du motoréducteur.

Selon une forme de réalisation particulière, une bague est fixée autour de l'arbre de sortie, la bague présente une paroi recevant le ou les aimants.

L'agencement de la bague pourvue d'aimants et de l'interrupteur à lames souples est très peu encombrant, peu coûteux et offre un signal électrique optimal qui permet alors d'augmenter la vitesse de rotation de l'élément rotatif.

Différents agencements sont possibles. Selon une première forme de réalisation, les aimants sont reçus sur une paroi frontale de la bague, orthogonale à l'arbre de sortie, de sorte que les aimants sont orientés coaxialement à l'arbre de sortie.

En alternative, les aimants peuvent être reçus sur une paroi latérale de la bague, parallèle à l'arbre, de sorte que les aimants sont orientés radialement par rapport à l'arbre de sortie.

L'interrupteur à lames souples est, quant à lui, monté sur une quelconque partie fixe en regard de la bague, tel que par exemple noyé dans une bride (24) fixe autour de l'arbre de sortie, ou dans un flasque latéral.

Le réglage de la distance entre les aimants et l'interrupteur à lames souples pourra être fait en fonction de la puissance des aimants en utilisant des usinages spécifiques, des butées mécaniques, des fixations pas vissage, du collage dans un siège usiné à cette fin, etc.

Le ou les aimants sont positionnés sur un élément rotatif du motoréducteur, et peut aussi bien, sans sortir du cadre de l'invention, sur au moins l'un des arbres de sortie, ou par exemple sur le rotor du moteur électrique pour avoir une précision beaucoup plus fine, notamment « n » fois plus importante, « n » étant le rapport de réduction du réducteur. Dans cette dernière configuration, une bague pourvue d'aimants peut par exemple prolonger le rotor du moteur électrique.

### DESCRIPTION SOMMAIRE DES FIGURES

D'autres avantages et caractéristiques techniques ressortiront mieux de la description qui va suivre du motoréducteur selon l'invention, donnée à titre d'exemple non limitatif à partir des figures annexées, dans lesquelles :
- la figure 1 est une vue en perspective d'une forme de réalisation préférée du motoréducteur selon l'invention ;
- la figure 2 est une vue similaire à celle de la figure 1, en perspective éclatée ;
- la figure 3 est une vue en coupe longitudinale du motoréducteur de la figure 1 ;
- la figure 4 est une vue de face du moteur électrique mis en oeuvre dans le motoréducteur ;
- la figure 5 est une vue de côté du motoréducteur de la figure 1, illustrant un flasque de fixation du motoréducteur, de forme carrée ;
- la figure 6 illustre une forme simplifiée du motoréducteur selon l'invention, sans enveloppe étanche ;
- la figure 7 est une vue de détail d'une extrémité du motoréducteur, en coupe longitudinale, illustrant la bague pourvue d'aimants orientés radialement ;
- la figure 8 est une vue en perspective de l'agencement de la bague de la figure 7.
- la figure 9 est une vue de détail d'une extrémité du motoréducteur, en coupe longitudinale, illustrant la bague pourvue d'aimants orientés axialement ;
- la figure 10 est une vue en perspective de l'agencement de la bague de la figure 9.

### DESCRIPTION DETAILLEE DE L'INVENTION

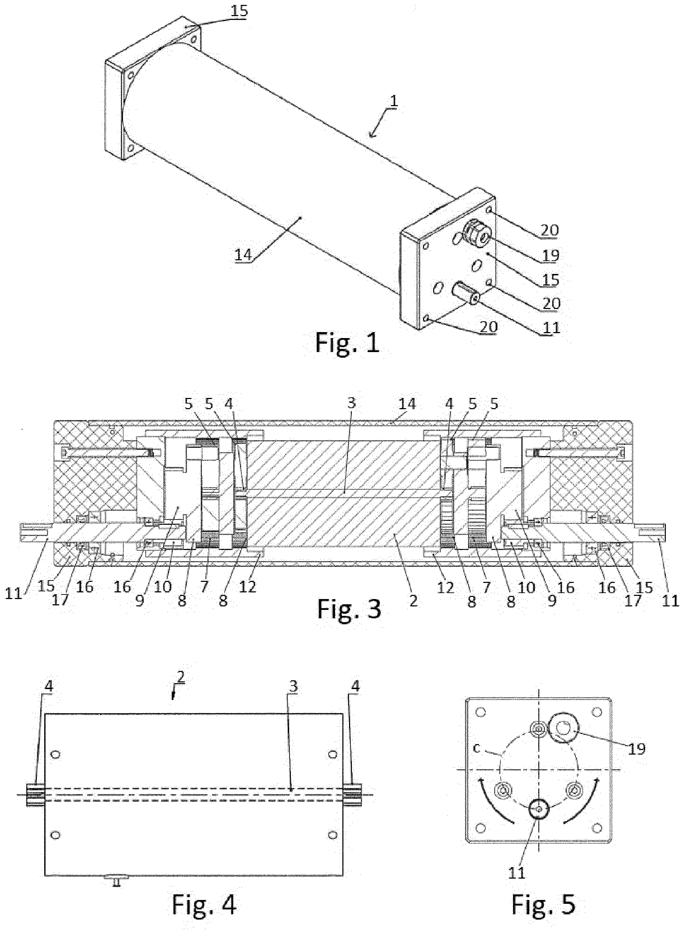

En référence aux figures 1 à 6, l'invention concerne un motoréducteur (1), notamment destiné à des applications de déplacement en translation d'un élément par rapport à deux moyens de guidage ou d'entrainement parallèles positionnés de part et d'autre de l'élément à déplacer.

Par exemple, le motoréducteur (1) peut être utilisé pour déplacer un portique au moyen de deux axes à l'extrémité desquels sont agencés des pignons/poulies, coopérant par exemple avec des chaînes/câbles de transmission.

Le motoréducteur (1) peut, dans une autre application, être utilisé pour déplacer une bâche de recouvrement d'une benne d'un camion benne, un abri ou une terrasse de piscine, par exemple au moyen de deux axes à l'extrémité desquels sont agencés des roulettes d'entraînement.

Le motoréducteur (1) selon l'invention est de préférence tubulaire et est un motoréducteur (1) planétaire à deux sortie coaxiales avec, en option, la possibilité d'excentrer les axes de sortie de façon à pouvoir s'adapter à la dimension des pignons/roulettes/poulies d'entraînement.

Plus précisément, le motoréducteur (1) comprend un moteur électrique (2) traversé, de part en part, par un arbre rotor (3) définissant deux axes de sortie moteur et équipé de pignons (4) à chacune de ses extrémités.

Les pignons (4) des axes de sortie moteur font office d'arbres d'entrée pour deux réducteurs planétaires (5), disposés, symétriquement, de part et d'autre du moteur électrique (2).

Les réducteurs planétaires (5) sont à au moins un étage, et de préférence à deux étages ou plus, et sont chacun engrainé avec le pignon (4) d'un axe de sortie moteur.

À cet effet, et de manière connue, les réducteurs planétaires (5) comprennent chacun une couronne (6) pourvue d'une denture intérieure et positionnée autour d'un pignon solaire, et au moins deux et de préférence trois pignons satellitaires (7) engrainés d'une part, avec le pignon solaire et, d'autre part, avec la couronne (6). Dans la forme de réalisation illustrée aux figures, le motoréducteur (1) comprend deux réducteurs planétaires (5) accouplés l'un à l'autre, de chaque côté du moteur électrique (2), et les couronnes (6) sont ménagées à l'intérieur d'une enceinte tubulaire (12).

Chaque réducteur planétaire (5) comprend une sortie (8), qui, dans une forme de réalisation particulière, peut directement être accouplée à un arbre de sortie motoréducteur. Dans cette configuration, non représentée, les arbres de sortie motoréducteur sont coaxiaux entre eux et coaxiaux avec l'arbre rotor (3) du moteur électrique (2).

Cette forme de réalisation permet de pouvoir assurer, par l'intermédiaire d'un motoréducteur (1) positionné entre les deux moyens de guidage ou d'entrainement de l'élément à déplacer, un entraînement central synchronisé et fiable mécaniquement.

Dans des applications dans lesquelles l'encombrement est important, et dans lesquelles il nécessaire d'abaisser au maximum l'axe des arbres (11) de sortie motoréducteur pour le rapprocher de la surface ou du plan de réception des moyens de guidage ou d'entrainement, notamment pour s'adapter à la taille des pignons/roulettes/poulies d'entraînement, les arbres de sortie (8) des réducteurs planétaires (5) sont accouplés à des trains d'engrenage simples notamment constitués par un pignon de sortie (9) du réducteur planétaire (5) engrené avec un pignon (10) solidaire de l'arbre (11) de sortie motoréducteur.

Ainsi, les arbres (11) de sortie motoréducteur se retrouvent excentrés par rapport à l'arbre rotor (3) du moteur électrique (2).

De cette manière, et en référence à la figure 5, la position de l'axe des arbres (11) de sortie motoréducteur peut être déplacée le long et autour d'un cercle (C), et notamment autour de l'axe de l'arbre rotor (3) du moteur électrique (2), en fonction de la distance souhaitée entre l'axe des arbres (11) de sortie motoréducteur et la surface ou le plan de réception des moyens de guidage ou d'entrainement.

Une autre solution pour faire varier cette distance consiste, par exemple, à faire pivoter directement le motoréducteur tubulaire (1) autour de l'axe de l'arbre rotor (3), sans modifier la position des arbres (11) de sortie motoréducteur (1).

Le motoréducteur (1) selon l'invention permet donc d'abaisser au maximum l'axe des arbres (11) de sortie motoréducteur (1), afin de les rapprocher de la surface ou du plan de réception des moyens de guidage ou d'entrainement, et permet donc de s'adapter au diamètre des pignons/roulettes/poulies d'entraînement, et donc réciproquement de pouvoir diminuer le diamètre de ces moyens d'entraînements.

Selon une forme de réalisation particulière, notamment celle illustrée aux figures 1 à 3, il est parfois nécessaire d'assurer une certaine étanchéité au motoréducteur (1). Dans cette situation, le motoréducteur (1) comprend, par exemple, une enveloppe externe tubulaire (14), de préférence en PVC, renfermant les différents éléments du motoréducteur (1), et fermée de manière étanche à ses deux extrémités par des flasques de fixation (15), également de préférence en PVC, au travers desquels font saillie, de manière étanche, les arbres (11) de sortie motoréducteur. Plus précisément, les arbres (11) de sortie motoréducteur sont passés dans des roulements à billes (16) et dans un joint à lèvre (17) pour assurer l'étanchéité. Un presse étoupe (19) permet de sortir de manière étanche les câbles d'alimentation du moteur électrique (2).

Pour la fixation et l'abaissement au maximum de l'axe des arbres (11) de sortie motoréducteur (1), les flasques de fixation (15) présentent une forme carrée avec des côtés d'une longueur sensiblement égale au diamètre de l'enveloppe externe (14), pour permettre la fixation par l'intermédiaire de vis (20) au niveau des angles de cette forme carrée.

Ainsi, les flasques (15) ne surélèvent pas le motoréducteur (1), et la fixation peut être effectuée par l'intermédiaire, par exemple, de vis de fixations positionnées au niveau des angles des flasques (15) carrés.

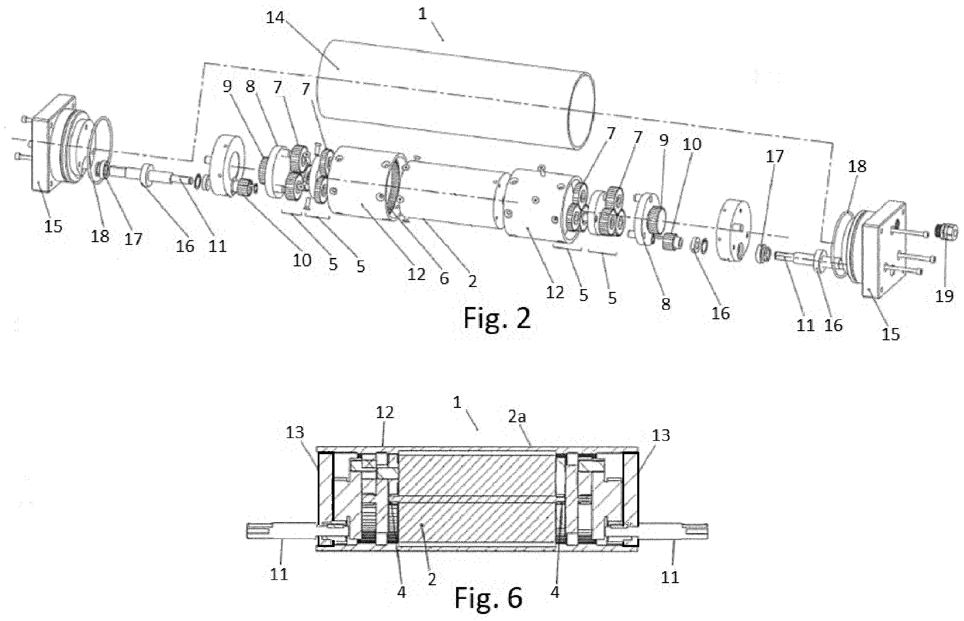

Selon une autre forme de réalisation particulière illustrée à la figure 6, et lorsque l'étanchéité n'est pas importante, les enceintes tubulaires (12) à l'intérieur desquelles sont ménagées les couronnes (6) peuvent se prolonger autour du moteur électrique (2) pour former directement le corps (12a) du motoréducteur (1).

Dans cette configuration, les enceintes tubulaires (12) sont refermées par des flasques (13) à partir desquels font saillie les arbres (11) de sortie motoréducteur.

En fonction de l'application concernée, les flasques (13) peuvent permettre d'assurer la fixation du motoréducteur (1) dans son environnement. Les flasques (13) peuvent, bien entendu, présenter toute forme appropriée. Cependant, s'il convient d'abaisser au maximum l'axe des arbres (11) de sortie motoréducteur, les flasques (13) présentent de préférence une forme carrée avec des côtés d'une longueur sensiblement égale au diamètre des enceintes tubulaires (12).

Il ressort de ce qui précède que l'invention fournit bien un motoréducteur (1) qui peut être utilisé dans des applications destinées à déplacer en translation un élément par rapport à deux éléments de guidage ou d'entrainement parallèles, positionnés de part et d'autre de l'élément déplacé, en diminuant fortement les risques de blocage ou de détérioration, tout en étant économique, et tout en permettant de diminuer au maximum la distance entre les arbres (11) de sortie du motoréducteur et la surface ou plan de réception des moyens de guidage ou d'entrainement.

Par ailleurs, en fonction de l'application considérée, il est parfois nécessaire de devoir compter le nombre de tours du motoréducteur (1).

Par exemple, l'invention peut être utilisée pour réaliser un ensemble de motorisation pour l'entrainement d'une couverture d'un bassin de piscine, immergé ou à proximité de ladite piscine.

A cet effet, le motoréducteur (1) comprend des capteurs de positions afin de déterminer le nombre de tours réalisés par le groupe motoréducteur (1) et de gérer les fins de course de la couverture du bassin de piscine.

Par exemple, le motoréducteur (1) comprend au moins un aimant (21) positionné sur un élément rotatif du motoréducteur (1), et un interrupteur (22) à lames souples positionné sur une partie fixe du motoréducteur (1), en regard de l'aimant (21) lorsque l'élément rotatif est entrainé en rotation, l'interrupteur (22) est destiné à être actionné lors du passage de l'aimant (21) devant l'interrupteur (22) pour permettre de compter le nombre de tours de l'élément rotatif.

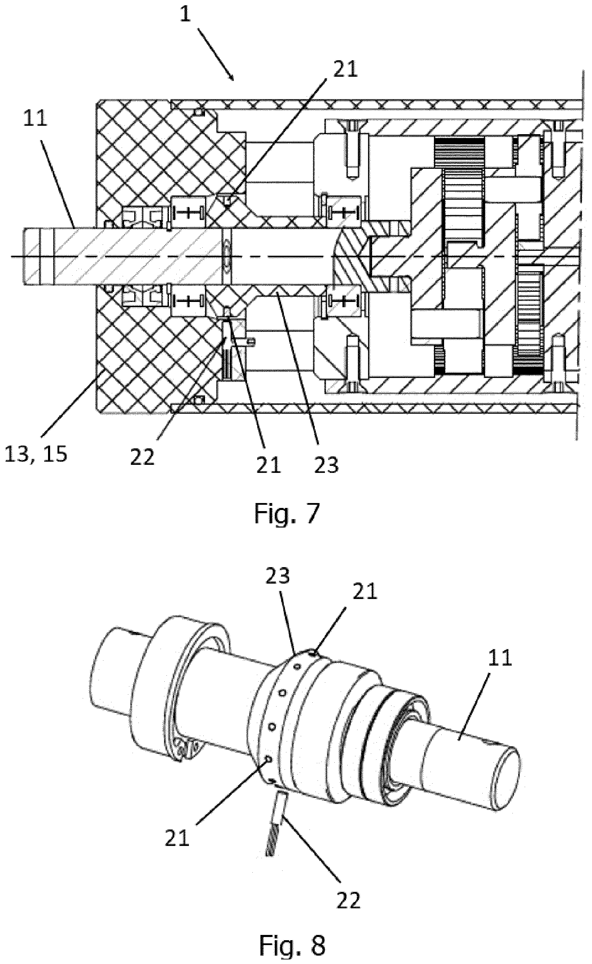

Plus précisément, et en référence aux figures 7 à 10, le motoréducteur (1) comprend une bague (23) fixée autour de l'élément rotatif du motoréducteur (1), tel qu'autour d'au moins l'un des arbres (11) de sortie.

La bague (23) présente une paroi, latérale ou frontale, recevant une pluralité d'aimants (21) régulièrement répartis autour de l'arbre (11) de sortie.

Lors de la rotation de l'arbre (11) de sortie, les aimants (21) sont destinés à passer successivement devant l'interrupteur (22) à lames souples, actionné par le passage desdits aimants (21), pour connaitre la position de l'arbre (11) de sortie et pour compter le nombre de tours utilisés par exemple pour déterminer les fins de course de la couverture d'un bassin de piscine.

L'interrupteur (22) à lames souples est positionné sur une partie fixe du motoréducteur (1), en regard, alternativement, de chaque aimant (21) lorsque l'arbre (11) de sortie est entrainé en rotation.

En référence aux figures 7 et 8, lorsque les aimants (21) sont reçus sur la paroi latérale de la bague (23), parallèle à l'arbre (11) de sortie, les aimants (21) sont orientés radialement par rapport à l'arbre (11) de sortie. L'interrupteur (22) est alors positionné en regard, et orienté radialement.

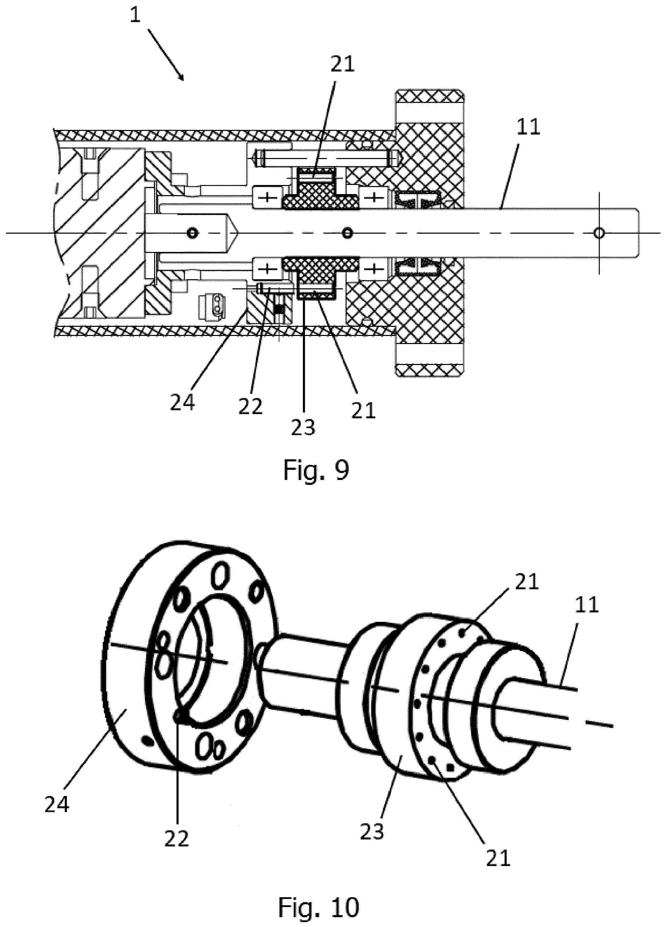

En référence aux figures 9 et 10, lorsque les aimants (21) sont reçus sur la paroi frontale de la bague (23), orthogonale à l'arbre de sortie, les aimants (21) sont orientés coaxialement à l'arbre de sortie. L'interrupteur (22) est alors positionné en regard, et orienté axialement.

Dans l'une ou l'autres des configurations, l'interrupteur (22) est monté sur une quelconque partie fixe en regard du passage des aimants (21), tel que par exemple fixé ou noyé dans une bride (24) fixe autour de l'arbre de sortie, ou bien fixé ou noyé dans un flasque latéral (13, 15).

## Revendications

1. Motoréducteur (1) ***caractérisé* en ce qu'**il comprend :
- un moteur électrique (2) traversé, de part en part, par un arbre rotor (3), de manière à former deux axes de sortie moteur, chaque axe de sortie présente un pignon (4) ;
- au moins deux réducteurs planétaires (5) à au moins un étage, chacun engrené avec le pignon (4) d'un axe de sortie moteur ;
- deux arbres (11) de sortie motoréducteur (1), chacun étant accouplé directement ou indirectement à un réducteur planétaire (5), les deux arbres (11) de sortie motoréducteur (1) étant coaxiaux entre eux.

2. Motoréducteur (1) selon la revendication 1, ***caractérisé* en ce que** les réducteurs planétaires (5) sont à au moins deux étages.

3. Motoréducteur (1) selon l'une des revendications précédentes, ***caractérisé* en ce qu'**il comprend deux réducteurs planétaires (5) accouplés l'un à l'autre, de chaque côté du moteur électrique (2).

4. Motoréducteur (1) selon l'une des revendications précédentes, ***caractérisé* en ce que** les arbres (11) de sortie motoréducteur (1) sont chacun accouplé directement à un réducteur planétaire (5), de sorte que les arbres (11) de sortie motoréducteur (1) sont coaxiaux avec l'arbre rotor (3) du moteur électrique (2).

5. Motoréducteur (1) selon l'une des revendications 1 à 3, ***caractérisé* en ce que** les arbres (11) de sortie motoréducteur (1) sont accouplés indirectement aux réducteurs planétaires (5) et par l'intermédiaire d'un train d'engrenage simple (9, 10), de sorte que les arbres (11) de sortie motoréducteur (1) sont excentrés par rapport à l'arbre rotor (3) du moteur électrique (2).

6. Motoréducteur (1) selon l'une des revendications précédentes, ***caractérisé* en ce que** chaque réducteur planétaire (5) comprend une couronne (6), les couronnes (6) étant ménagées à l'intérieur d'une enceinte tubulaire (12).

7. Motoréducteur (1) selon la revendication 6, ***caractérisé* en ce que** les enceintes tubulaires (12) à l'intérieur desquelles sont ménagées les couronnes (6) se prolongent autour du moteur électrique (2) pour former directement le corps (12a) du motoréducteur (1), les enceintes tubulaire (12) étant refermées par deux flaques (13) à partir desquels font saillie les arbres (11) de sortie motoréducteur (1).

8. Motoréducteur (1) selon la revendication 7 ***caractérisé* en ce que** les flasques (13) sont carrés, avec des côtés d'une longueur sensiblement égale au diamètre des enceintes tubulaires (12).

9. Motoréducteur (1) selon l'une des revendications précédentes, ***caractérisé* en ce qu'**il comprend une enveloppe externe tubulaire (14) renfermant les différents éléments du motoréducteur (1), fermée de manière étanche à ses deux extrémités par des flaques de fixation (15) au travers desquels font saillie de manière étanche les arbres (11) de sortie motoréducteur (1).

10. Motoréducteur (1) selon la revendication 9, ***caractérisé* en ce que** les flasques de fixation (15) sont carrés, avec des côtés d'une longueur sensiblement égale au diamètre de l'enveloppe externe (14).

11. Motoréducteur (1) selon l'une des revendications précédentes, ***caractérisé* en ce qu'**il comprend au moins un aimant (21) positionné sur un élément rotatif du motoréducteur (1), et un interrupteur (22) à lames souples positionné sur une partie fixe du motoréducteur (1), en regard de l'aimant (21) lorsque l'élément rotatif est entrainé en rotation, l'interrupteur (22) est destiné à être actionné lors du passage de l'aimant (21) devant l'interrupteur (22) pour permettre de compter le nombre de tours de l'élément rotatif.

12. Motoréducteur (1) selon la revendication 11, ***caractérisé* en ce qu'**une pluralité d'aimants (21) sont positionnés sur l'élément rotatif, régulièrement répartis autour de l'axe de rotation de l'élément rotatif.

13. Motoréducteur (1) selon l'une des revendications 11 à 12, ***caractérisé* en ce que** l'élément rotatif est au moins l'un des arbres (11) de sortie.

14. Motoréducteur (1) selon la revendication 13, ***caractérisé* en ce qu'**une bague (23) est fixée autour de l'arbre de sortie, les aimants (21) sont reçus sur une paroi frontale de la bague (23), orthogonale à l'arbre (11) de sortie, de sorte que les aimants (21) sont orientés coaxialement à l'arbre (11) de sortie.

15. Motoréducteur (1) selon la revendication 13, ***caractérisé* en ce qu'**une bague (23) est fixée autour de l'arbre (11) de sortie, les aimants (21) sont reçus sur une paroi latérale de la bague (23), parallèle à l'arbre (11) de sortie, de sorte que les aimants (21) sont orientés radialement par rapport à l'arbre (11) de sortie.
